# EUROPEAN PATENT APPLICATION

(11) **EP 1 146 733 A1**
(43) Date of publication of application: **17.10.2001**
(21) Application number: 01108534.7
(22) Date of filing: 04.04.2001
(51) Int. Cl.: H04N 5/225

(54) **Image pickup device and portable telephone including the same**

(30) Priority: 10.04.2000 JP 2000108064
(71) Applicant: MITSUBISHI DENKI KABUSHIKI KAISHA, Tokyo (JP)
(72) Inventor: Miyake, Hiroyuki, Chiyoda-ku, Tokyo 100-8310 (JP)
(74) Representative: Bohnenberger, Johannes, Dr.

(57) **Abstract**

This image pickup device has: an image pickup element (2) having a photoreceiving face (10); a plurality of lenses (3a, 3b) for receiving light entering from different directions; a mirror (4) as travel direction changing means for changing a travel direction of light as necessary so that light passed through the lenses (3a, 3b) travels toward the photoreceiving face (10); and a light shield plate (5) for substantially dividing a space where images are formed so that light fluxes entering from the lenses (3a, 3b) and forming images on the photoreceiving face (10) are not overlapped with each other.

## Description

### BACKGROUND OF THE INVENTION

### Field of the Invention

The present invention relates to an image pickup device capable of receiving optical information from a plurality of directions and a portable telephone including the image pickup device.

### Description of the Background Art

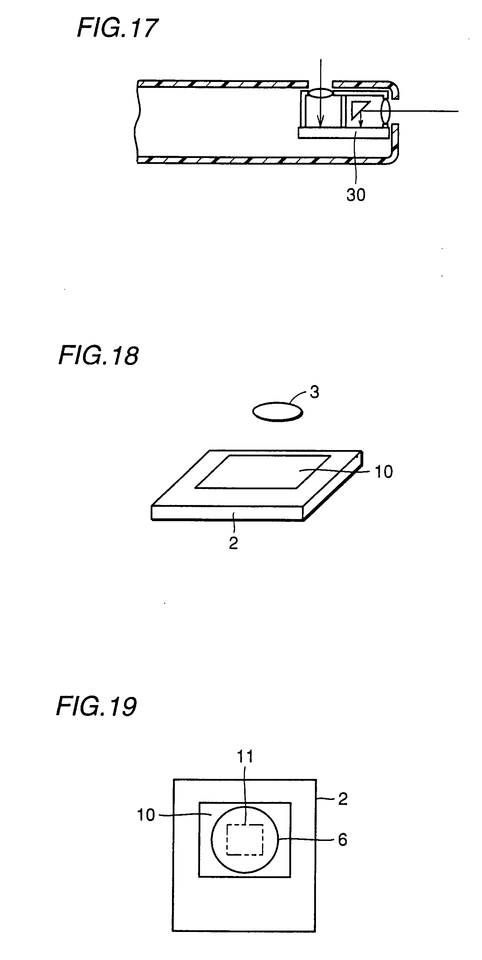

Conventionally, as an image pickup device assembled in a portable telephone, an image pickup device having a structure as shown in Fig. 18 is used. Specifically, the image pickup device includes a photoreceiving element 2 having a photoreceiving face 10 and a lens 3 disposed apart from the photoreceiving face 10 only by a predetermined distance so that an image is formed on the photoreceiving face 10. In the structure, light passing through the lens 3 falls on the photoreceiving face 10 of the photoreceiving element 2 and an image is formed in a circular range (hereinbelow, called an "image circle") 6 shown in Fig. 19. Image information is usually detected and used in a predetermined area 11 defined by a shape such as a rectangle (hereinbelow, called "image information detection area") within the image circle 6.

In order to capture a scene from two or more different directions without largely changing the posture of the body of the portable telephone, a structure having a turnable part including the image pickup device is considered.

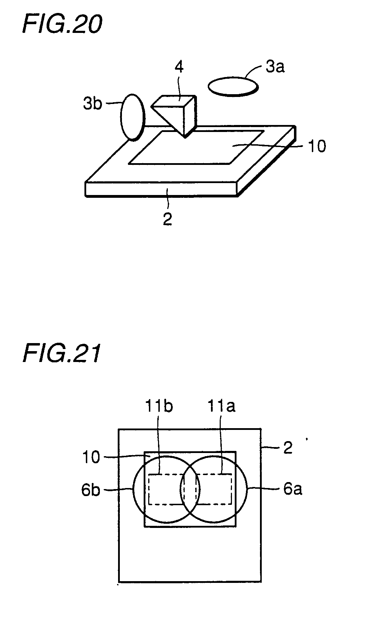

In the portable telephone of the structure having the turnable part including the image pickup device, however, when the part is turned repeatedly by the user, a trouble is prone to occur and durability deteriorates. Consequently, a structure in which the orientation of the image pickup device itself is not turned but fixed and, instead, a plurality of lenses turned in different directions are preliminarily mounted can be considered. Specifically, for example as shown in Fig. 20, one lens 3a transmits light entering from a direction normal to the photoreceiving face 10 like a conventional lens. Another lens 3b is disposed so as to transmit light entering from a direction parallel to the photoreceiving face 10.
Light passed through the lens 3b is reflected by a mirror 4, thereby changing the travel direction of the light toward the photoreceiving face 10. In this case, images are arranged to be formed in different portions in the single photoreceiving face 10 of a limited area. As shown in Fig. 21, however, there is an overlapped portion between image circles 6a and 6b, and light from the lenses 3a and 3b interferes with each other in the overlapped portion. When the overlapped portion is included in image information detection areas 11a and 11b in the image circles, accurate image information cannot be obtained.

It is therefore an object of the invention to provide an image pickup device capable of obtaining accurate image information without overlap between image circles even when images are formed by using a plurality of lenses on a single photoreceiving face of a limited area.

### SUMMARY OF THE INVENTION

In order to achieve the object, according to the invention, there is provided an image pickup device having: a first lens transmitting light entering from a first direction; a second lens transmitting light entering from a second direction which is different from the first direction; a photoreceiving face for receiving light passed through the first lens and light passed through the second lens; and a light shield plate, wherein the light shield plate prevents an interference between a first light flux passing through the first lens and traveling toward the photoreceiving face and a second light flux passing through the second lens and traveling toward the photoreceiving face so that the first and second light fluxes are not overlapped with each other on the photoreceiving face.

By employing the configuration, even when light from a different direction enters each of the lenses, the two light fluxes are blocked by the light shield plate so as not to be overlapped with each other on the photoreceiving face. Consequently, image circles are formed on the photoreceiving face without interfering with each other. Thus, accurate image information can be obtained in each of the image circles.

According to the invention, preferably, a translucent member including a plate-shaped part which is almost parallel to the photoreceiving face to protect the photoreceiving face is further provided. The translucent member is constructed by a plurality of translucent member pieces divided so as to be adapted to placement of the light shield plate, and the translucent member pieces are disposed so as to sandwich the light shield plate.

By employing the configuration, since the translucent member is divided into the translucent member pieces, adhesion of a foreign matter to the photoreceiving face and moisture absorption of the photoreceiving face can be prevented without disturbing installation of the light shield plate.

Preferably, in the invention, the translucent member pieces and the light shield plate are formed integrally. By employing the configuration, the number of parts at the time of assembling the image pickup device can be decreased and assembling is facilitated.

Preferably, in the invention, each of the translucent member pieces includes at least two side walls which extend from the plate-shaped part and are in contact with a photoreceiving element having the photoreceiving face so as to maintain a distance between the plate-shaped part and the photoreceiving face constant. When the configuration is employed, only by assembling the side walls of the translucent member so as to be in contact with the surface of the photoreceiving element, the distance from the photoreceiving face of the plate-shaped part becomes a desired value, and the plate-shaped part and the photoreceiving face are parallel to each other with desired precision. Thus, assembling is facilitated.

In the invention, preferably, the side walls surround a space between the translucent member piece and the photoreceiving face by a combination with the light shield plate. By employing the configuration, the space around the photoreceiving face can be sealed in each of the divided areas of the photoreceiving face, and adhesion of a foreign matter to the photoreceiving face and moisture absorption of the photoreceiving face can be prevented with reliability.

In the invention, preferably, travel direction changing means for changing a travel direction of at least one of light passed through the first lens and light passed through the second lens so that the light travels toward the photoreceiving face is provided. By employing the configuration, even when the first lens and second lens are oriented in quite different directions, light passed through the lenses can be directed toward the single photoreceiving face.

A portable telephone according to the invention includes any of the image pickup devices. By employing the configuration, a portable telephone capable of capturing scenes from two or more directions and obtaining accurate image information without having the turnable structure can be realized.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view of an image pickup'device according to first to fourth embodiments of the invention;
Fig. 2 is a perspective view showing placement of main components of the image pickup device according to the first embodiment of the invention;
Fig. 3 is a diagram for explaining operation of the image pickup device according to the first embodiment of the invention;
Fig. 4 is a diagram for explaining a photoreceiving face of the image pickup device according to the first embodiment of the invention;
Fig. 5 is a perspective view showing placement of main components of the image pickup device according to a second embodiment of the invention;
Fig. 6 is an explanatory diagram showing the relation between translucent members and a light shield plate in the image pickup device according to the second embodiment of the invention;
Fig. 7 is a perspective view showing a state where the translucent members and the light shield plate in the image pickup device according to the second embodiment of the invention are integrated;
Fig. 8A is a plan view of the main portion of an image pickup device according to a third embodiment of the invention;
Fig. 8B is a side view of the main portion of the image pickup device according to the third embodiment of the invention;
Fig. 8C is a front view of the main portion of the image pickup device according to the third embodiment of the invention;
Fig. 9A is a plan view of a translucent member of the image pickup device according to the third embodiment of the invention;
Fig. 9B is a side view of the translucent member of the image pickup device according to the third embodiment of the invention;
Fig. 10 is an explanatory diagram showing the relation between the translucent members and the light shield plate of the image pickup device according to the third embodiment of the invention;
Fig. 11A is a plan view showing a state where the translucent members and the light shield plate of the image pickup device according to the third embodiment of the invention are integrated;
Fig. 11B is a side view showing a state where the translucent member and the light shield plate of the image pickup device according to the third embodiment of the invention are integrated;
Fig. 12A is a side view of a main portion of an image pickup device according to a fourth embodiment of the invention;
Fig. 12B is a front view of a main portion of the image pickup device according to the fourth embodiment of the invention;
Fig. 13A is a plan view of a translucent member of the image pickup device according to the fourth embodiment of the invention;
Fig. 13B is a side view of the translucent member of the image pickup device according to the fourth embodiment of the invention;
Fig. 14 is an explanatory diagram showing the relation between the translucent members and the light shield plate of the image pickup device according to the fourth embodiment of the invention;
Fig. 15A is a plan view showing a state where the translucent members and the light shield plate of the image pickup device according to the fourth embodiment of the invention are integrated;
Fig. 15B is a side view showing a state where the translucent member and the light shield plate of the image pickup device according to the fourth embodiment of the invention are integrated;
Fig. 16 is a cross section taken along line XVI-XVI of Fig. 15A showing the state where the translucent member and the light shield plate of the image pickup device according to the fourth embodiment of the invention are integrated;
Fig. 17 is a schematic cross section of a portable telephone according to a fifth embodiment of the invention;
Fig. 18 is a perspective view showing placement of main components of an image pickup device according to a conventional technique;
Fig. 19 is an explanatory diagram of a photoreceiving face of the image pickup device according to the conventional technique;
Fig. 20 is a perspective view showing placement of main components of an image pickup device having two lenses according to a conventional technique; and
Fig. 21 is an explanatory diagram showing a photoreceiving face of an image pickup device having two lenses according to the conventional technique.

### DESCRIPTION OF THE PREFERRED EMBODIMENTS

### First Embodiment

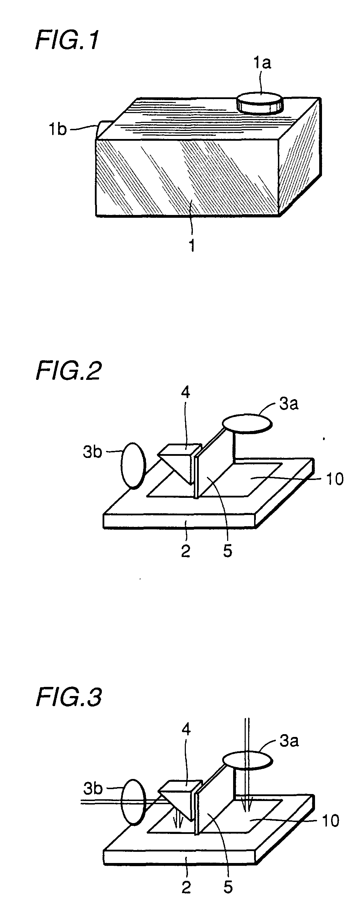

Fig. 1 is an external view of an image pickup device according to an embodiment of the invention. The image pickup device has lens openings 1a and 1b on two outer surfaces which are perpendicular to each other of a lens mounter 1 so as to capture scenes in two directions perpendicular to each other. Fig. 2 is a schematic diagram of the internal structure. The image pickup device has a photoreceiving element 2 having a photoreceiving face 10, lenses 3a and 3b transmitting light entering via the lens openings 1a and 1b respectively, a mirror 4 as travel direction changing means for changing the travel direction of the light passed through the lens 3b toward the photoreceiving face 10, and a light shield plate 5. The light shield plate 5 prevents an interference between a light flux passing through the lens 3a and traveling toward the photoreceiving face 10 and a light flux passing through the lens 3b and traveling toward the photoreceiving face 10 so that the light fluxes are not overlapped with each other on the photoreceiving face 10. The light shield plate 5 is disposed so that its lower end is, not necessarily in contact with the photoreceiving face 10, but close to the photoreceiving face 10 to a degree that an interference of light which forms images on both sides of the light shield plate 5 can be prevented, and its upper end is in a high position from the photoreceiving face 10 to a degree that the interference can be prevented. The light shield plate 5 may be a mold made of a resin or the like or may be obtained by performing an antireflection process by coating the surface of a metal plate. The light shield plate 5 is not limited to a plate shape but may be a film as long as it can shield transmission of a light flux.

Since the light shield plate 5 prevents the interference between the flux passed through the lens 3a and the flux passed through the lens 3b, even when light enters from a plurality of different directions via the lenses 3a and 3b, as shown in Fig. 3, the light from the lens 3a and that from the lens 3b travels toward corresponding areas on the photoreceiving face 10 without crossing each other. The image circles 6a and 6b are therefore formed in the areas separated by the light shield plate 5 on the photoreceiving face 10. When the image information detection areas 11a and 11b can be provided in the areas separated by the light shield plate 5, accurate image information which is not influenced by light passing through another lens can be obtained.

### Second Embodiment

Generally, in an image pickup device, in order to prevent adhesion of a foreign matter to the photoreceiving face 10 and to prevent moisture absorption of the photoreceiving face 10, a translucent member 7 as a plate-shape member is disposed close to and parallel to the photoreceiving face 10. When the translucent member 7 and the photoreceiving face 10 are too close to each other, it causes a problem such that an interference fringe occurs. Consequently, the translucent member 7 and the photoreceiving face 10 are apart from each other only by a predetermined distance to the degree that such a problem is not caused.

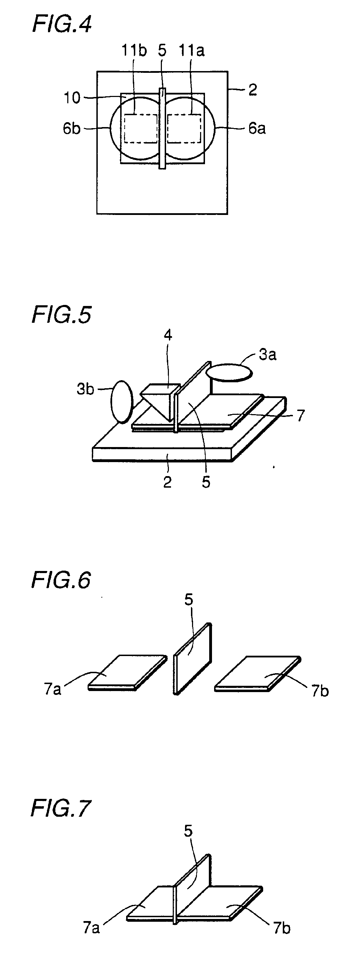

The image pickup device in the embodiment has the translucent member 7 as shown in Fig. 5 in addition to the configuration described in the first embodiment. Since the light shield plate 5 exists and the distance from the lower end of the light shield plate 5 to the photoreceiving face 10 is shorter than the distance from the translucent member 7 to the photoreceiving face 10, geometrically, the translucent member 7 and the light shield plate 5 have to cross each other. In the case of mounting the light shield plate 5, therefore, the conventional single-plate translucent member 7 cannot be used as it is. As shown in Fig. 6, the translucent member 7 is constructed by translucent member pieces 7a and 7b divided so as to be adapted to the placement of the light shield plate 5 seen from the above. The translucent member pieces 7a and 7b are disposed so as to sandwich the light shield plate 5 as shown in Fig. 5.

Since the translucent member 7 is divided into the translucent member pieces 7a and 7b so as to be adapted to the placement of the light shield plate 5, without disturbing the installation of the light shield plate 5, the adhesion of a foreign matter to the photoreceiving face and moisture absorption of the photoreceiving face can be prevented.

Since the translucent member pieces 7a and 7b are disposed so as to sandwich the light shield plate 5, they can be positioned almost in the same plane at a desired distance from the photoreceiving face 10 and can play a role similar to that of the conventional single-plate translucent member 7 irrespective of the existence of the light shield plate 5.

As shown in Fig. 7, when the light shield plate 5 and the translucent member pieces 7a and 7b are formed integrally in advance, it is preferable since the number of parts at the time of assembling the image pickup device can be reduced, and the assembling is facilitated.

When the translucent member pieces 7a and 7b are not made of a simple translucent material but are members having optical characteristics such as IR (Infrared) filters or the like, it is preferable since it becomes unnecessary to dispose an IR filter or the like in another position by a separate part, the number of parts can be decreased, and the thickness of the image pickup device can be reduced.

### Third Embodiment

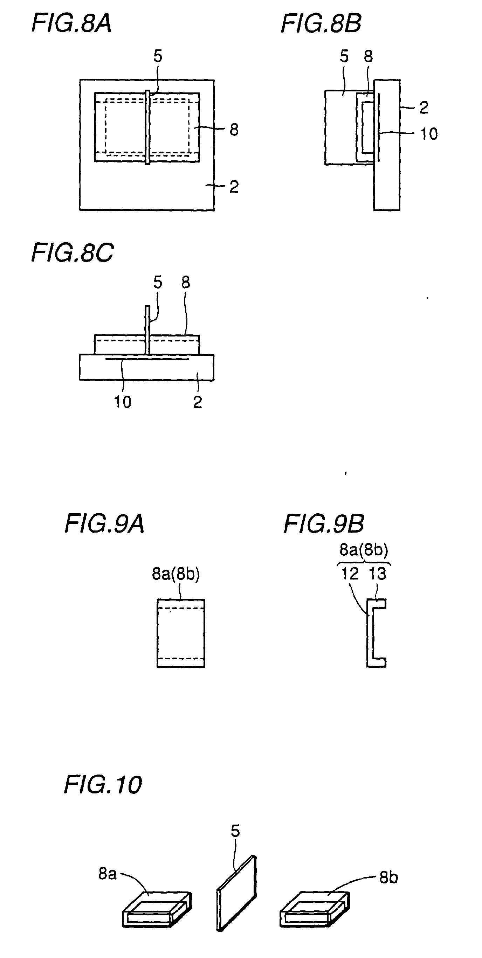

Figs. 8A and 8B show the main portion of an image pickup device according to a third embodiment. The image pickup device is basically similar to that of the second embodiment but has, in place of the translucent member 7 as a plate-shaped member, a translucent member 8 as a U-shaped member as shown in Figs. 9A and 9B. As shown in Fig. 10, the translucent member 8 is divided into translucent member pieces 8a and 8b so as to be adapted to the placement of the light shield plate 5, and the translucent member pieces 8a and 8b are disposed so as to sandwich the light shield plate 5. As shown in Fig. 9B, the translucent member 8 has a U-letter shape by including, as parallel two sides, side walls 13 which extend from a plate-shaped part 12 and are in contact with the photoreceiving element 2. The side walls 13 are used so that the distance from the photoreceiving face 10, of the plate-shaped part 12 becomes a desired value when the side walls 13 are assembled in contact with the surface of the photoreceiving element 2, and the plate-shaped part 12 and the photoreceiving face 10 are in parallel with each other with desired precision. The height and shape of the side wall 13 are very accurate to the degree that the object can be achieved.

Since the translucent member 8 does not have a simple plate shape but has the U shape including the side walls 13 as two sides, only by assembling the side walls 13 of the translucent member 8 so as to be in contact with the surface of the photoreceiving element 2, the distance from the photoreceiving face 10 of the plate-shaped part 12 becomes a desired value, and the plate-shaped part 12 and the photoreceiving face 10 become parallel to each other with desired precision. The assembling is therefore facilitated.

By the side walls 13, adhesion of a foreign matter to the photoreceiving face 10 and moisture absorption of the photoreceiving face 10 can be suppressed to a certain degree.

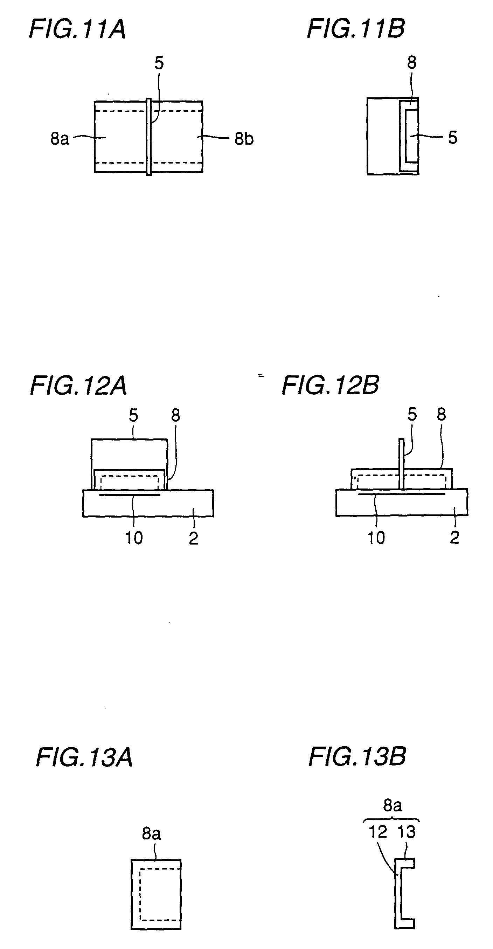

As shown in Figs. 11A and 11B, it is preferable to preliminarily integrally form the light shield plate 5 and the translucent member pieces 8a and 8b because the number of parts at the time of assembling the image pickup device can be decreased, and assembling is facilitated.

### Fourth Embodiment

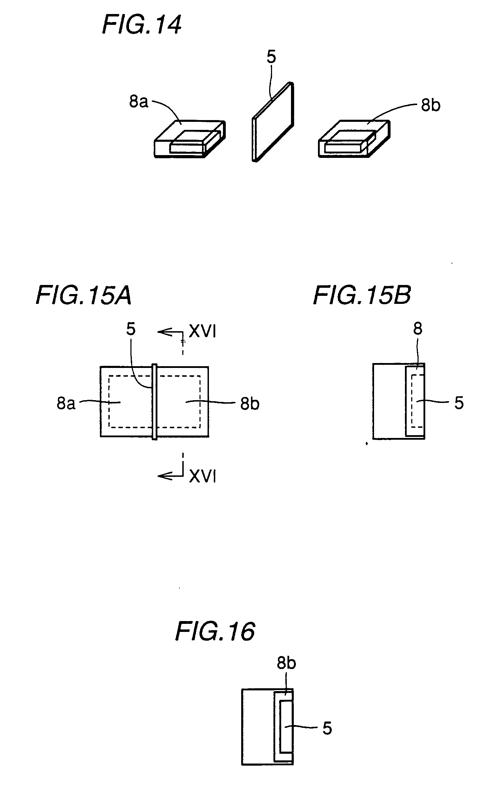

Figs. 12A and 12B show a main portion of an image pickup device according to a fourth embodiment. The image pickup device is basically similar to that of the third embodiment except that the translucent member 8 is not a U-shaped member but a member having a shape in which further another face is added to a U-shaped member as shown in Figs. 13A and 13B. As shown in Fig. 14, the translucent member 8 is divided into translucent member pieces 8a and 8b so as to be adapted to the placement of the light shield plate 5, and the translucent member pieces 8a and 8b are disposed so as to sandwich the light shield plate 5.

Since the translucent member 8 has the shape obtained by adding further another face to a U shape, by disposing the translucent member pieces 8a and 8b so as to sandwich the light shield plate 5 in the directions shown in Figs. 12A and 12B, a space near the photoreceiving face 10 can be sealed in each of the divided areas of the photoreceiving face 10. Consequently, adhesion of a foreign matter to the photoreceiving face 10 and moisture absorption of the photoreceiving face 10 can be prevented more reliably.

When the height and shape of the side walls 13 are very accurate, in a manner similar to the case of the U shaped translucent member 8 in the third embodiment, an effect such that the distance from the photoreceiving face 10 of the plate-shaped part 12 becomes a desired value and the plate-shaped part 12 and the photoreceiving face 10 become parallel to each other with desired precision can be also produced.

It is preferable to preliminarily integrally form the light shield plate 5 and the translucent member pieces 8a and 8b as shown in Figs. 15A and 15B since the number of parts at the time of assembling the image pickup device can be decreased and assembling is facilitated. Fig. 16 is a cross section taken along line XVI-XVI of Fig. 15A.

In each of the foregoing embodiments, the structure in which light passed through the lens 3a travels directly toward the photoreceiving face 10 and light passed through the lens 3b travels toward the photoreceiving face 10 after its travel direction is changed by the mirror 4 as travel direction changing means has been described as an example. A structure such that the travel directions of both light passing through the two lenses are changed by the travel direction changing means may be also employed. A structure such that no travel direction changing means exists and both light passed through the two lenses travels directly toward the photoreceiving face 10 may be also used.

Although the structure in which the number of lenses is two is shown as an example in each of the foregoing embodiments, the number of lenses is not limited to two but may be larger than two.

### Fifth Embodiment

Fig. 17 shows a portable telephone according to a fifth embodiment. The portable telephone has an image pickup device 30 described in any of the foregoing embodiments. In the case where the user wishes to capture scenes from different two or more directions while the portable telephone is used, scenes from two or more directions can be easily captured without turning a part of the portable telephone. Therefore, a portable telephone having no part which is turned for capturing an image can be realized, and the durability can be improved.

According to the invention, even when light enters the lenses from different directions, an interference between two light fluxes is prevented by the light shield plate so that the light fluxes are not overlapped with each other on the photoreceiving face, so that image circles on the photoreceiving face are formed without interfering with each other. When the image information detection area can be provided in each of the areas, accurate image information which is not influenced by light passed through another lens can be obtained.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An image pickup device including:
a first lens (3a, 3b) transmitting light entering from a first direction;
a second lens (3a, 3b) transmitting light entering from a second direction which is different from said first direction;
a photoreceiving face (10) for receiving light passed through said first lens and light passed through said second lens; and
a light shield plate (5),
wherein said light shield plate (5) prevents an interference between a first light flux passing through said first lens and traveling toward said photoreceiving face and a second light flux passing through said second lens and traveling toward said photoreceiving face so that said first and second light fluxes are not overlapped with each other on said photoreceiving face (10).

2. The image pickup device according to claim 1, further including a translucent member (7, 8) including a plate-shaped part which is almost parallel to said photoreceiving face (10) to protect said photoreceiving face (10),
wherein said translucent member (7) is constructed by a plurality of translucent member pieces (7a, 7b) divided so as to be adapted to placement of said light shield plate (5), and
said translucent member pieces (7a, 7b) are disposed so as to sandwich said light shield plate (5).

3. The image pickup device according to claim 1 or 2, wherein said translucent member pieces (7a, 7b) and said light shield plate (5) are formed integrally.

4. The image pickup device according to claim 1 to 3, wherein each of said translucent member pieces (8a, 8b) includes at least two side walls (13) which extend from said plate-shaped part (12) and are in contact with a photoreceiving element having said photoreceiving face (10) so as to maintain a distance between said plate-shaped part (12) and said photoreceiving face (10) constant.

5. The image pickup device according to claim 1 to 4, wherein said side walls (13) surround a space between said translucent member piece (8a, 8b) and said photoreceiving face (10) by a combination with said light shield plate (5).

6. The image pickup device according to claim 1 to 5, further including travel direction changing means for changing a travel direction of at least one of light passed through said first lens and light passed through said second lens so that the light travels toward said photoreceiving face (10).

7. A portable telephone including an image pickup device according to claim 1.
